Europäisches Patentamt

European Patent Office

Office européen des brevets

(11) Veröffentlichungsnummer: **0 253 115 B1**

(12) **EUROPÄISCHE PATENTSCHRIFT**

(45) Veröffentlichungstag der Patentschrift: **14.10.92**

(21) Anmeldenummer: **87107875.4**

(22) Anmeldetag: **01.06.87**

(51) Int. Cl.⁵: **C08G 59/58**, C09D 5/00, C08G 59/50, C08G 59/56, C09D 163/00

(54) **Pulverlacke, deren Herstellung und Verwendung.**

(30) Priorität: **17.07.86 DE 3624078**

(43) Veröffentlichungstag der Anmeldung:
**20.01.88 Patentblatt 88/03**

(45) Bekanntmachung des Hinweises auf die Patenterteilung:
**14.10.92 Patentblatt 92/42**

(84) Benannte Vertragsstaaten:
**BE CH DE FR GB IT LI NL SE**

(56) Entgegenhaltungen:
**EP-A- 0 123 797**
**EP-A- 0 198 226**
**DE-A- 2 602 412**
**GB-A- 2 075 512**
**US-A- 3 272 763**

(73) Patentinhaber: **HÜLS AKTIENGESELLSCHAFT**
**Patentabteilung / PB 15 - Postfach 13 20**
**W-4370 Marl 1(DE)**

(72) Erfinder: **Weiss, Jörn-Volker, Dr.**
**Im Hadkamp 1**
**W-4358 Haltern 3(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Gegenstand der Erfindung sind Pulverlacke auf der Grundlage eines Stoffgemisches aus Epoxidverbindungen und gegebenenfalls Polyestern und Salzen von Benzolpolycarbonsäuren mit primären Diaminen als Härter.

In der Industrie besteht ein großer Bedarf an Pulverlacken aller Art. Dies liegt vor allem daran, daß man beim Einsatz auf Lösemittel verzichten kann und nur sehr geringe Verluste bei der Anwendung auftreten. Pulverlacke sind sparsam und umweltschonend.

Die meisten bekannten Lacke ergeben glänzende Oberflächen. In jüngster Zeit ist man vor allem an matten Oberflächen interessiert. Auch aus sicherheitstechnischen Überlegungen ist es vielfach günstiger, matte Oberflächen zu erzeugen.

Das einfachste Prinzip, eine matte Oberfläche zu erhalten, besteht darin, dem Pulverlack je nach Ausmaß des gewünschten Matteffekts kleinere oder größere Mengen Füllstoffe, wie z. B. Kreide, feinverteiltes Siliciumdioxid, Bariumsulfat, oder unverträgliche Zusatzstoffe, wie Wachse, Cellulosederivate, beizumischen. Diese Zusätze bewirken jedoch eine Verschlechterung der lacktechnischen Filmeigenschaften.

In der DE-PS 23 24 696 wird ein Verfahren zur Herstellung von Überzügen mit matter Oberfläche vorgestellt, bei dem ein Spezialhärter -das Salz von cyclischen Amidinen mit bestimmten Polycarbonsäuren - zum Einsatz kommt. Tatsächlich hat sich aufgrund seiner hervorragenden lacktechnischen Eigenschaften nur dieses Verfahren auf dem Markt durchsetzen können; das Verfahren wurde inzwischen mehrfach verbessert (vgl. DE-A 30 26 455, 30 26 456 und 35 11 998).

Dennoch weist dieses Verfahren einige grundsätzliche Nachteile auf. Die erforderlichen Amidine sind teuer und nicht immer in den notwendigen Mengen verfügbar. Es wäre wünschenswert, könnte man leichter zugängliche basische Verbindungen, etwa direkt flüssige Diamine, ingeeigneter Form als Härter für Epoxidharze einsetzen. Die Salze dieser Amine mit den üblichen Carbonsäuren sind jedoch im Gegensatz zu den Amidinsalzen so beständig, daß unter den in der Pulverlackindustrie üblichen Einbrennbedingungen keine hinreichende Härtung der Epoxidharze stattfindet.

In der JP-OS 82/61 020 werden Additionsprodukte des Dodekamethylendiamins mit aliphatischen Dicarbonsäuren und Kohlendioxid beschrieben, die bereits bei Temperaturen zwischen 90 und 120 °C die Aushärtung von Epoxidharzen bewirken sollen. Unsere Versuche zeigen, daß unter diesen Bedingungen keine Lackfilme mit zufriedenstellenden Eigenschaften erhalten werden. Insbesondere wird kein Matteffekt erzielt (siehe Vergleichsversuche). Der Fachmann wird daher davon abgehalten, dieses System für Epoxidbeschichtungen einzusetzen.

Die DE-OS 33 28 134 beschreibt Pulverlacke auf der Grundlage von Stoffgemischen von Epoxidverbindungen, Polycarbonsäuren und Umsetzungsprodukten des Triacetondiamins mit Epoxiden, Harnstoff und Isocyanaten, die nach Aushärtung matte Überzüge ergeben. Die Triacetondiaminderivate ermöglichen eine Aushärtung bereits bei Temperaturen oberhalb von 160 °C in akzeptablen Behandlungszeiten. Ungünstig ist, daß dieses System auf bestimmte Triacetondiaminderivate beschränkt ist, die zunächst in einer Vorreaktion hergestellt und isoliert werden müssen.

Ziel der vorliegenden Erfindung war es, lagerstabile Pulverlacke aufzufinden, die folgenden Anforderungen gerecht werden sollten:

1. Die Härter sollten sowohl für Epoxidharze als auch für die sogenannten Hybridsysteme, d. h. Mischsysteme von Epoxid- und Polyesterharzen, anwendbar sein.

2. Als Härter sollten Substanzen eingesetzt werden, die leicht zugänglich, leicht herstellbar und in praktisch beliebigen Mengen verfügbar sind.

3. Die Aushärtung sollte vorzugsweise matte Oberflächen ergeben.

Es wurden jetzt Pulverlacke gefunden, die diesen Anforderungen gerecht werden. Sie weisen eine Korngröße von weniger als 100 µm auf und stellen ein Stoffgemisch folgender Komponenten dar

- Epoxidverbindung mit im Durchschnitt mehr als einer Epoxidgruppe pro Molekül und einem Schmelzpunkt über 70 °C
- gegebenenfalls bis zu 45 % Polyester, bezogen auf das Gewicht der Epoxidverbindungen
- Salze von Benzolpolycarbonsäuren mit primären (cyclo)aliphatischen $C_{4-18}$-Diaminen
- 1,5-Diazabicyclo[2.2.2.]-octan
- sowie übliche Zusätze.

Gegenstand der vorliegenden Erfindung ist ferner ein Verfahren zur Herstellung von matten Überzügen gemäß Anspruch 4.

Der Vorteil der erfindungsgemäßen Pulverlacke liegt vor allem darin, daß man nicht auf spezielle N-haltige Verbindungen und Addukte angewiesen ist, die gegebenenfalls erst synthetisiert werden müssen, sondern daß man überaus gebräuchliche Verbindungen einsetzen kann, die kommerziell verfügbar sind.

Die einsetzbaren Epoxidharze weisen durchschnittlich mehr als eine Epoxidgruppe pro Molekül auf. Sie haben einen Schmelzpunkt über 40 ° C. Die Epoxidharze können sowohl gesättigt als auch ungesättigt, aliphatisch, cycloaliphatisch, araliphatisch oder heterocyclisch sein. Im einzelnen handelt es sich um

- Epoxide mehrfach ungesättigter Kohlenwasserstoffe, wie z. B. Vinylcyclohexen, Dicyclopentadien, Cyclohexadien-(1,3) und -(1,4), Cyclododecadiene und -triene, Isopren, Hexadien-(1,5), Butadien, Polybutadiene, Divinylbenzole und dergleichen,
- Epoxyether mehrwertiger Alkohole, wie z. B. Ethylen-, Propylen- und Butylenglykol, Glycerin, Pentaerythrit, Sorbit, Polyvinylalkohole und Thiodiglykole,
- Epoxyether mehrwertiger Phenole, wie Resorcin, Hydrochinon, Bis-(4-hydroxyphenol)-methan, Bis-(4-hydroxy-3,5-dichlorphenyl)-methan, 1,1-Bis-(4-hydroxyphenyl)-ethan, 2,2-Bis-(4-hydroxyphenyl)-propan, 2,2-Bis-(4-hydroxy-3-methylphenyl)-propan, 2,2-Bis-(4-hydroxy-3,5,5-trichlorphenyl)-propan, Bis-(4-hydroxyphenyl)-phenylmethan, Bis-(4-hydroxyphenyl)-diphenylmethan, Bis-(4-hydroxyphenyl)-cyclohexylmethan, 4,4'-Dihydroxydiphenyl, 2,2'-Dihydroxydiphenyl,
- N-haltige Epoxide, wie N,N-Diglycidylanilin, N,N'-Dimethyldiglycidyl-4,4'-diaminodiphenylmethan, Triglycidylisocyanurat.

Als besonders geeignet haben sich Epoxide auf Bisphenol A-Basis mit einem Epoxid-Äquivalent von 500 bis 2 000 und einem Schmelzpunkt von 70 bis 140 ° C erwiesen.

Geeignete Polyester, die in Mengen bis zu 45 %, bezogen auf das Gewicht der Epoxidverbindungen, zugesetzt werden können, umfassen Oligoester (cyclo)aliphatischer oder aromatischer Polycarbonsäuren mit (cyclo)aliphatischen Diolen, wobei beide Komponenten 4 bis 18 C-Atome aufweisen.

Zur Herstellung der Oligoester werden aliphatische, cycloaliphatische oder aromatische Di- oder Polycarbonsäuren einerseits und aliphatische oder cycloaliphatische Diole andererseits eingesetzt. Die Carbonsäuren bzw. Diole enthalten 4 bis 18 C-Atome. Im Falle der Diole können einzelne Kohlenstoffatome gegebenenfalls auch durch Sauerstoffatome ersetzt sein. Bedingung hierfür ist, daß ein solches Sauerstoffatom durch mindestens 2 Kohlenstoffatome von der Hydroxylgruppe und/oder einem weiteren Sauerstoffatom in der Kette getrennt ist.

Als Dicarbonsäuren kommen z. B. infrage: Bernsteinsäure, Glutarsäure, Adipinsäure, Trimethyladipinsäure, Azelainsäure, Sebazinsäure, Decandisäure, Dodecandisäure, Fumarsäure, Maleinsäure und Isophthalsäure. Als Polycarbonsäure werden z. B. Benzol-1,3,5-tricarbonsäure, Benzol-1,2,4-tricarbonsäure, Benzol-1,2,3-tricarbonsäure, Naphthalin-1,5-dicarbonsäure, Benzophenon-4,4'-dicarbonsäure, Butantetracarbonsäure, Cyclopentatetracarbonsäure, Pyromellithsäure, Benzol-1,2,3,4-tetracarbonsäure,Benzol-1,2,3,5-tetracarbonsäure, und 3,4-Dicarboxy-1,2,3,4-tetrahydronaphthalin-1-bernsteinsäure eingesetzt.

Als Diole kommen z. B. 1,3-, 1,4- oder 2,3-Butandiol, 1,5-Pentandiol, 2,2-Dimethyl-1,3-propandiol, 1,6- und 2,5-Hexandiol sowie 1,12-Dodecandiol infrage.

Die carboxylgruppenhaltigen Oligoester besitzen eine Säurezahl von 245 bis 265, insbesondere 250 bis 260. Die Erweichungspunkte liegen im allgemeinen im Bereich von 40 bis 110 ° C, vorzugsweise im Bereich von 60 bis 90 ° C. Typischerweise liegt ihre mittlere Molmasse unterhalb von 2 500.

Die Herstellung der Oligoester ist bekannt (Sorensen u. Campbell -"Preparative Methods of Polymer Chemistry", Interscience Publishers Inc., New York, 1961, S. 111 - 127). Im allgemeinen erfolgt die Herstellung bei Temperaturen bis 200 ° C durch Kondensation in der Schmelze. Der Reaktionsverlauf kann dabei durch Titration der überschüssigen Carboxylgruppen verfolgt werden, so daß das Ende der Reaktion leicht bestimmt werden kann.

Die Benzolpolycarbonsäuren enthalten 2 bis 5, vorzugsweise 2 bis 4, unmittelbar an den Benzolkern gebundene Carboxylgruppen. Bevorzugt werden Phthalsäure, Terephthalsäure (TPS), Trimellithsäure (TMS) und Pyromellithsäure (PMS).

Die primären Diamine weisen eine aliphatische oder cycloaliphatische Struktur mit 4 bis 18 C-Atomen auf.

Besonders geeignet sind

- Derivate des Cyclohexylamins, die eine weitere aliphatisch oder cycloaliphatisch gebundene Aminogruppe enthalten, insbesondere Isophorondiamin (IPD) und 4,4'-Diamino-3,3'-dimethyldicyclohexylmethan 5 (DDDM)
- aliphatische Diamine von der Struktur des Hexamathylendiamins, die gegebenenfalls durch mehrere niedere Alkylgruppen substituiert sein können, insbesondere 1,6-Diaminohexan (Dia-1,6) und 2,2,4- und/oder 2,4,4-Trimethylhexamethylendiamin (TMD).

Die Herstellung der Salze erfolgt zweckmäßigerweise durch Umsetzung der Benzolpolycarbonsäuren mit den aufgeführten Diaminen in wäßriger bzw. wäßrig alkoholischer Lösung bei einer Temperatur von etwa 50 ° C. Die Menge der Säure wird so eingestellt, daß auf eine Aminogruppe mindestens eine, vorzugsweise höchstens zwei Säuregruppen, kommen.

3

Die erfindungsgemäßen Pulverlacke enthalten ferner 1,5-Diazabicyclo[2.2.2.]-octan, vorzugsweise in einer Menge von 0,5 bis 1 %, bezogen auf das Gesamtgewicht der Formulierung.

Bei der Herstellung der pulverförmigen Überzugsmittel können weiterhin übliche Zusätze, wie Verlaufmittel, Pigmente, Farbstoffe, Füllstoffe, Katalysatoren, Thixotropiermittel, UV- und Oxidationsstabilisatoren, Verwendung finden. Die Menge dieser Zusätze kann, bezogen auf die Menge des Bindemittels, innerhalb einesweiten Bereichs schwanken.

Die Herstellung der Überzugsmittel erfolgt beispielsweise in der Weise, daß man die einzelnen Komponenten (Epoxidharze, Härter und gegebenenfalls Zusätze) mahlt, mischt und bei 90 bis 110 °C extrudiert. Nach dem Extrudieren wird abgekühlt und auf eine Korngröße kleiner als 100 μm gemahlen.

Die Applikation auf die zu überziehenden Substrate kann nach bekannten Methoden erfolgen, z. B. durch elektrostatisches Pulversprühen, Wirbelsintern oder elektrostatisches Wirbelsintern. Anschließend wird das aufgetragene Überzugsmittel 5 bis 35 Minuten im Temperaturbereich zwischen 160 bis 240 °C, vorzugsweise 10 bis 20 Minuten zwischen 180 bis 220 °C, ausgehärtet.

Zur Beschichtung mit den erfindungsgemäßen pulverförmigen Überzugsmitteln eignen sich alle Substrate, die bei den angegebenen Härtungstemperaturen beständig sind, z. B. Metalle, Glas, Keramik oder Kunststoff.

Die mit Hilfe der erfindungsgemäßen Härter hergestellten Überzüge weisen eine gleichmäßige Struktur und einen matten Glanz auf. Gemäß der Bestimmungsmethode nach Gardner (60°) können Glanzgrade bis 12 erreicht werden. In unerwarteter Weise bleiben andere lacktechnische Eigenschaften auf hohem Niveau.

Die lacktechnischen Eigenschaften wurden mit Hilfe der nachstehenden Prüfmethoden bestimmt:

Tiefung nach Erichsen in mm (DIN 53 156)

Kugelschlagprüfung nach Gardner (ASTM D 2794)

Gitterschnittprüfung (DIN 53 151)

Glanzgrad nach Gardner bei 60° (ASTM D 523)

Beispiele

Die Herstellung von 200 g Härter erfolgt in einem 1-l-Dreihalskolben, ausgerüstet mit einem mechanischen Rührer, einem Kühler, einem Pulvertrichter und einem Heizpilz.

Die wasserlöslichen Polyamine (z. B. IPD, TMD) werden in 400 ml voll entsalztem Wasser (VE-Wasser), nichtwasserlösliche Amine (z. B. Dodekamethylendiamin, (Dia-12)) in einem Gemisch aus 200 ml Ethanol und 200 ml VE-Wasser vorgelegt. Unter Rühren werden dann über den Pulvertrichter die festen Säuren portionsweise zu der Lösung gegeben. Anschließend wird das Reaktionsgemisch 3 Stunden bei 50 °C gerührt.

Die Isolierung des entstandenen Salzes erfolgt durch Abziehen des Lösemittels am Rotationsverdampfer und anschließende fünfstündige Trocknung des festen Rückstandes unter Vakuum bei 100 °C.

Herstellung der Pulverlacke

Die als Härter verwendeten Salze werden zunächst mit Hilfe einer Rotor-Schnellmühle zu einem sehr feinen Pulver vermahlen. Anschließend wird dieses Pulver mit den übrigen Pulverlackkomponenten (Epoxidharz und gegebenenfalls Polyester, Titandioxid, 1,4-Diazabicyclo[2.2.2.]-octan, Verlaufmittel in Form eines 10 %igen Masterbatches etc) in einem Vormischer grob gemischt und in einem Buss-Kokneter bei 100 °C extrudiert. Das abgekühlte Extrudat wird zu einem feinen Pulver vermahlen, wobei die Grobanteile über 100 μm durch ein Sieb abgetrennt werden. Das so erhaltene Pulver wird in einer elektrostatischen Pulverspritzanlage bei einer Spannung von 60 KV auf Stahlbleche appliziert und in einem Umlufttrockenschrank bei Temperaturen zwischen 180 und 220 °C eingebrannt.

Eingesetzte Härtersalze

| Nr. | Polyamin/Polycarbonsäure | Molverhältnis |
|-----|--------------------------|---------------|
| 1 | IPD/TMS | 3 : 2 |
| 2 | IPD/Dia-12/TMS | 2 : 1 : 2.1 |
| 3 | IPD/Dia-12/TPS | 1 : 1 : 2 |
| 4 | IPD/Dia-6/TMS | 1 : 2 : 2 |
| 5 | IPD/Dia-6/TMS | 2 : 1 : 2 |
| 6 | TMD/PMS | 2 : 1 |
| 7 | TMD/Dia-12/PMS | 1 : 2 : 2 |
| 8 | TMD/Dia-6/PMS | 2 : 2 : 2 |
| 9 | TMD/TPS | 1 : 1 |
| 10 | TMD/IPD/PMS | 0.5 : 1.5 : 1 |
| 11 | DDDM/PMS | 2 : 1 |
| 12 | DDDM/TMS | 3 : 2 |
| 13 | TMD/IPD/TMS | 1 : 2 : 2.15 |
| 14 | TMD/IDP/TPS | 1 : 0.5 : 2 |

Zum Vergleich

| 15 | Dia-12/BS | 1 : 1 |

BS = Bernsteinsäure

Für die Herstellung der Pulverlacke werden folgende Epoxidharze und OH-gruppenhaltige Polyester eingesetzt:

| Epoxidharz 1 (EP 1) | |
|---------------------|---|
| EP-Äquivalentgewicht<br>EP-Wert<br>Erweichungsbereich | 850 - 940<br>0,10 - 0,11<br>80 - 100 °C |
| Epoxidharz 2 (EP 2) | |
| EP-Äquivalentgewicht<br>EP-Wert<br>Erweichungsbereich | 730 - 840<br>0,12 - 0,13<br>94 - 106 |
| Polyesterharz 1 (PE 1) | |
| Säurezahl<br>Glasumwandlungstemperatur | 47 - 57<br>58 °C |

Bei dem Epoxidharz 1 handelt es sich um ein Produkt der Fa. Shell AG, Hamburg, das unter dem Namen Epikote® 1004 im Handel erhältlich ist. Epoxidharz 2 ist ein Produkt der Fa. Dow Chemical Co., mit der Bezeichnung DER® 663U.

Das Polyesterharz 1 ist ein Produkt der Fa. DSM RESINS, Zwolle, Niederlande, mit der Bezeichnung URALAC® 2228.

Zusammensetzung der Pulverlacke

| Beispiel | 1 - 10 | 11 | 12, 13 | 14 - 19 | A - C | D | E |
|---|---|---|---|---|---|---|---|
| Härter | 3 | 5 | 3 | 3 | 3 | 3 | 3 |
| Harz EP 1 | 56 | 54 | 56 | - | 56,5 | 56,5 | 56,5 |
| Harz EP 2 | - | - | - | 40,8 | - | | |
| Harz PE 1 | - | - | - | 15,2 | - | | |
| $TiO_2$ | 40 | 40 | 40 | 40 | 40 | 40 | 40 |
| Verlaufmittel | 0,5 | 0,5 | 0,5 | 0,5 | 0,5 | 0,5 | 0,5 |
| 1,4-Diazabi-cyclo-[2.2.2]-octan | 0,5 | 0,5 | 0,5 | 0,5 | - | - | 0,5 |

Die Zahlen in der Tabelle geben die Mengenteile der jeweiligen Komponenten an.

Bei den Beispielen 1 - 13 wird der jeweils entsprechende Härter 1 - 13 einsetzt, ferner Bsp. 14- Härter Nr. 1; Bsp. 15- Härter Nr. 10; Bsp. 16- Härter Nr. 8; Bsp. 17 - Härter Nr. 13; Bsp. 18 - Härter Nr. 9; Bsp. 19 - Härter Nr. 14; Beispiel A - Härter Nr. 10; Beispiel B - Härter Nr. 10; Beispiel C, D und E - Härter Nr. 15.

EP 0 253 115 B1

Härtungsbedingungen und mechanische Kenndaten der Lacke

| Beispiel | 1 | 2 | 3 | 4 | 5 | 6 | 7 | 8 | 9 | 10 | 11 | 12 | 13 | 14 | 15 | 16 | 17 | 18 | 19 |
|---|---|---|---|---|---|---|---|---|---|---|---|---|---|---|---|---|---|---|---|
| Härter Nr. | 1 | 2 | 3 | 4 | 5 | 6 | 7 | 8 | 9 | 10 | 11 | 12 | 13 | 1 | 10 | 8 | 13 | 9 | 14 |

Härtungsbedingungen

| | 1 | 2 | 3 | 4 | 5 | 6 | 7 | 8 | 9 | 10 | 11 | 12 | 13 | 14 | 15 | 16 | 17 | 18 | 19 |
|---|---|---|---|---|---|---|---|---|---|---|---|---|---|---|---|---|---|---|---|
| Zeit /Minuten/ | 15 | 10 | 10 | 10 | 10 | 10 | 15 | 15 | 10 | 15 | 15 | 15 | 15 | 15 | 15 | 15 | 15 | 10 | 10 |
| Temperatur /°C/ | 200 | 200 | 200 | 200 | 200 | 200 | 200 | 200 | 200 | 200 | 200 | 200 | 200 | 200 | 200 | 200 | 200 | 200 | 200 |

mechanische
Kenndaten

| | 1 | 2 | 3 | 4 | 5 | 6 | 7 | 8 | 9 | 10 | 11 | 12 | 13 | 14 | 15 | 16 | 17 | 18 | 19 |
|---|---|---|---|---|---|---|---|---|---|---|---|---|---|---|---|---|---|---|---|
| Schichtdicke | 55 | 70 | 55 | 70 | 80 | 55 | 60 | 60 | 60 | 50 | 60 | 60 | 55 | 60 | 55 | 55 | 65 | 50 | 55 |
| Dornbiegetest | 4 | <2 | <2 | <2 | <2 | <2 | <2 | <2 | <2 | <2 | 2 | <2 | <2 | 2 | <2 | <2 | <2 | <2 | <2 |
| Erichsentiefung | 3,2 | 6,5 | 8,2 | 7,3 | 5,8 | 7,8 | 8,1 | 8,7 | 10,1 | 7,5 | 4,0 | 6,8 | 7,5 | 9,1 | 9,7 | 10,1 | 8,1 | 10,2 | 10,4 |
| Kugelschlag direkt | >80 | >80 | >80 | >80 | >80 | 60 | 60 | >80 | >80 | 80 | 80 | >80 | >80 | >80 | >80 | >80 | >80 | >80 | >80 |
| Kugelschlag reverse | 10 | 20 | >80 | 20 | 20 | <10 | <10 | >80 | >80 | <10 | <10 | 40 | 20 | 20 | 50 | 50 | 20 | >80 | >80 |
| Glanz 60 ° | 12 | 16 | 45 | 17 | 14 | 25 | 16 | 22 | 44 | 15 | 18 | 27 | 13 | 21 | 22 | 43 | 26 | 50 | 65 |

EP 0 253 115 B1

## Härtungsbedingungen und mechanische Kenndaten der Lacke

| Beispiel | A | B | C | D | E |
|---|---|---|---|---|---|
| Härter Nr. | 13 | 10 | 15 | 15 | 15 |

Härtungsbedingungen

| | | | | | |
|---|---|---|---|---|---|
| Zeit /Minuten/ | 20 | 30 | 10 | 30 | 30 |
| Temperatur /°C/ | 200 | 200 | 200 | 120 | 120 |

mechanische
Kenndaten

| | | | | | |
|---|---|---|---|---|---|
| Schichtdicke /µm/ | 50 | 55 | 65 | 55 | 60 |
| Dornbiegetest | >32 | >32 | > 2 | 25 | 6 |
| Erichsentiefung | 0,4 | 0,2 | 9,2 | 0,3 | 1,3 |
| Kugelschlag | | | | | |
|     direkt | 20 | 20 | >80 | 10 | 40 |
|     reverse | <10 | <10 | <10 | <10 | <10 |
| Glanz 60 ° | 35 | 100 | 60 | 45 | 72 |

**Patentansprüche**

1. Lagerstabile Pulverlacke mit einer Korngröße kleiner als 100 µm, auf der Grundlage eines Stoffgemisches aus
   - Epoxidverbindungen mit im Durchschnitt mehr als einer Epoxidgruppe pro Molekül und einem Schmelzpunkt über 70 °C
   - Salzen von Benzolpolycarbonsäuren mit 2 bis 5 Säuregruppen mit N-haltigen Verbindungen
   - sowie üblichen Zusätzen,
   dadurch gekennzeichnet,
   daß man als N-haltige Verbindungen primäre aliphatische und cycloaliphatische Diamine mit 4 bis 18 C-Atomen einsetzt und zusätzlich 1,5-Diazabicyclo[2.2.2.]-octan verwendet.

2. Pulverlacke gemäß Anspruch 1,
   dadurch gekennzeichnet,
   daß man als N-haltige Verbindungen Derivate des Cyclohexylamins einsetzt.

3. Pulverlacke gemäß Anspruch 1,
   dadurch gekennzeichnet,
   daß man als N-haltige Verbindungen gegebenenfalls alkylsubstituierte Hexamethylendiamine einsetzt.

4. Verfahren zur Herstellung von matten Überzügen,
   dadurch gekennzeichnet,
   daß man mindestens äquimolare Mengen einer Benzolpolycarbonsäure mit 2 bis 5 Säuregruppen mit einem primären Diamin gemäß der Definition in Ansprüchen 1 bis 3 umsetzt und das erhaltene Salz mit Epoxidverbindungen mit im Durchschnitt mehr als einer Epoxidgruppe pro Molekül und einem Schmelzpunkt über 70°C, 1,5-Diazabicyclo[2.2.2.]-octan und gegebenenfalls sonstigen üblichen Zusätzen, wobei das Gemisch eine Korngröße kleiner als 100 $\mu$m aufweist, bei einer Temperatur von 160 bis 240 °C innerhalb von 5 bis 35 Minuten, vorzugsweise bei einer Temperatur von 180 bis 220 °C innerhalb von 10 bis 20 Minuten, zu einem duroplastischen Lack aushärtet.

## Claims

1. Powder coatings stable in storage and having a grain size smaller than 100 $\mu$m, on the basis of a mixture of substances comprising:
   epoxy compounds having on an average more than 1 epoxy group per molecule and a melting point above 70°C,
   salts of benzene polycarboxylic acids having 2 to 5 acid groups with N-containing compounds, and customary additives,
   characterized in that the N-containing compounds used are primary aliphatic and cycloaliphatic diamines having 4 to 18 C atoms plus 1,5-diazabicyclo[2.2.2.]-octane.

2. Powder coatings according to claim 1, characterized in that the N-containing compounds used are derivatives of cyclohexylamine.

3. Powder coatings according to claim 1, characterized in that the N-containing compounds used are possibly alkyl-substituted hexamethylenediamines.

4. A process for the preparation of matt coatings, characterized in that at least equimolar quantities are reacted of a benzene polycarboxylic acid having 2 to 5 acid groups with a primary diamine, as defined in claims 1 to 3, and the salt obtained is hardened with epoxy compounds having on an average more than 1 epoxy group per molecule and a melting point above 70°C, 1.5-diaxabicyclo[2.2.2.]-octane and possibly other customary additives at a temperature of 160 to 240°C within 5 to 35 minutes, preferably at a temperature of 180 to 220°C within 10 to 20 minutes, to give a thermosetting plastics coating.

## Revendications

1. Peintures en poudre ayant une taille de grains inférieure à 100 x $10^{-6m}$ à base d'un mélange de substances constitué
   - de composés époxy comportant en moyenne plus d'un groupe époxy par molécule et ayant un point de fusion de plus de 70°C,
   - de sels d'acides benzène-polycarboxyliques, ayant de 2 à 5 groupes acides, avec des composés azotés,
   - ainsi que des additifs usuels,
   caractérisées en ce que, en tant que composés azotés, on utilise des diamines primaires aliphatiques et cyclo-aliphatiques ayant de 4 à 18 atomes de carbone, et on utilise en outre du 1,5-diazabicyclo-[2.2.2]-octane.

2. Peintures en poudre selon la revendication 1, caractérisées en ce que, en tant que composés azotés, on utilise des dérivés de la cyclohexylamine.

3. Peintures en poudre selon la revendication 1, caractérisées en ce que, en tant que composés azotés, on utilise des hexaméthylènediamines éventuellement substituées par des groupes alkyle.

4. Procédé pour la production de revêtements mats, caractérisé en ce que l'on fait réagir des quantités au moins équimolaires d'un acide benzènepolycarboxylique, ayant de 2 à 5 groupes acides, avec une diamine primaire selon les définitions des revendications 1 à 3, et on fait durcir le sel obtenu avec des composés époxy comportant en moyenne plus d'un groupe époxy par molécule et ayant un point de fusion de plus de 70°C, du 1,5-diazabicyclo[2.2.2]-octane et éventuellement d'autres additifs usuels, le mélange présentant une taille de grains inférieure à 100 x $10^{-6m}$ à une température de 160 à 240°C, en l'espace de 5 à 35 minutes, de préférence à une température de 180 à 220°C en l'espace de 10 à 20 minutes, pour obtenir une peinture thermodurcissable.